# EUROPEAN PATENT APPLICATION

(11) **EP 3 098 628 A1**
(43) Date of publication of application: **30.11.2016**
(21) Application number: 15075018.0
(22) Date of filing: 29.05.2015
(51) Int. Cl.: G01T 7/00, G01N 37/00

(54) **THE SOLVED MISTERY OF GRAVITY**

(71) Applicant: Kirby, James, 40000 Mont de Marsan (FR)
(72) Inventor: Kirby, James, 40000 Mont de Marsan (FR)

(57) **Abstract**

Gravity does not exist. Not as a force of attraction. Not as a force of weight. Gravity does not pull objects together & therefore does not hold the universe together nor does it cause the rotation of a body in space or their orbits around a Star.

The Movement of objects like planets in their orbits is caused by the rotation & movement of the Star which rotates the EMR in space. Space is not a Vacuum it is filled with electro-magnetic radiation which can be turned by the stars.

The universe does not allow a Vacuum and when one does occur it draws in vast amounts of the EMR creating the Singularity converting energy to matter and creating the Big bang. This also creates a shockwave through the EMR and the wave gets bigger & bigger and one is carrying our universe with it which accounts for its expansion. A wave that may have left its original universe behind.

Nothing in the universe has weight so large bodies are easy to move. What we perceive as weight is cause by the following , a body like a planet is created by the accumulation of matter. It therefore has expanded from its center and pushes out against the Radiation of the EMR & that of the Star. From the planets size, spin & movement it may hold an atmosphere partly pinned by the radiation bombarding It and the spin & orbit of the planet. An objects weight on that planet is therefore the Density of the object plus the pressure from the atmosphere above. It is not the weight of an object but its Density that determines which object (air metal people water) that sinks closest to the planets surface or center.

The Earths Moon may best illistrate this point that Gravity does not exist nor is it the cause of movement. The Ocean tides on Earth are not caused by Gravity. They are caused by the Pressure from the Sun's radiation on the Earths atmosphere, causing pressure from the bombarding of the molecules by the Sun's radiation and the expansion from the heat. This pushes on the atmosphere sending the tides / oceans towards the far side of the Earth giving the impression the tide is divided by the attraction to the Moon & the Sun. When the Moon eclipses the Sun it looks like a double force attracting the tides / Oceans but in fact the Moon is blocking the Sun's Radiation and therefore relieving the pressure to the max so the atmosphere expands and relieves the pressure on the ocean sending the ocean towards the Moon & the Sun

It is worth pointing out the the Moon with a diameter of less than 4 ,ooo km has no atmosphere. So if it can not hold on to a light or heavy GAS / atmosphere how are we to believe it can move Oceans around when they are 100 times the Moons diameter away.

## Description

### ON MATTERS OF GRAVITY

Its place in our Solar System & The Universe .

Let me make the following statement.

### GRAVITY DOES NOT EXIST !

### (You might want to write that down )

That's the statement I want to make . Its a fact I want to register as an I.P. The rest is just WINDOW DRESSING and nothing else written should detract from that statement.

Further more , I want to state the Following :
a) GRAVITY does not exist as a FORCE !
b) GRAVITY does not exist a as PARTICLE of MATTER such as a GRAVITON , like an electron , protron etc.
c) GRAVITY does not exist as a FORCE of ATTRACTION . IE. Two bodies if free to move would be drawn towards each other.
d) GRAVITY does not exist as a force causing weight!

So , why is it that we all believe GRAVITY exists . Well there are many examples which give us this illusion .
a) bodies on Earth have weight.
b) object fall from the sky
c) heavy object sink
d) Satelities & Probes have all felt the PULL !
e) The athmosphere is held against a planet The Moon revolves around Earth , all held there by " Gravity ". The planets in the Solar System revolve around the Sun and The Milkyway revolves in the Universe. Plenty of examples.

Then there are Great Scientists , Kepler, Copernicus , Galileo , Newton , Einstein & Hubble that have all contributed to the laws of Gravity. Orbits have been calculated , Red shifts detected & Laws have been written. Everything appears to be interconnected & what else could stop the Universe flying apart ?

There is a great weight of evidense to support the Theory of Gravity. But its worth nothing that our eyes do deceive us & there have been many a reversal in Science Past.
a) The Earth was Flat. Now we know its Round
b) There is Land as far as the eye can SEE. Now we know the Earth is covered in 70% Water.
c) There are stars in every direction , The Universe must be round. Now we know its FLAT ! ........ or is it ?

So what has changed ? Well the first thing is that for every example one can give of an Object falling there is another that shows an Object Rising ! Such as a Hydrogen or Helium ballon.

Second , we call it SPACE , Empty Space & for good reason. We can see right through it and there is a great expanse between all MATTER. However SPACE is not empty. It is not a VACCUM . This is an important point. The Universe will not allow a VACCUM to exist. So besides matter, Planets , moons & Stars , SPACE is filled with EMR or Electro Magnetic Radiation 95% of which is invisable to our eyes. (We can not see X-rays , Radio Waves , Ultra Violet light or Infra Red Light to name but a few). Infact visible white light only occupies a tiny fraction of the EMR spectum. Nothing new. However EMR provides space with a very , very LOW PRESSURE System of Radiation moving at the speed of light Connecting everything in the Universe and since Everything (matter) Massive Stars , planet, moons all weight NOTHING it is easy to move them about, to rotate them.

Therefore it is "The STARS " that are the driving force of the Universe as they Rotate like a HURRICANE they turn everything including the EMR and the PLANETS in our Solar System.

So how does it all work ?

Well lets look at everything from the beginning Some of which will include a little spectulation on :
a) The origins of the known universe & its possible shape.
b) The Singularity & the Big Bang & how did it happen ?
c) How an athmosphere stays in place , why things fall.
d) The Working of the Solar System & why many Planets are tilted
e) Reconcilation of the figures for GRAVITY (PULL) on the inner planets
f) Reconcilation of the figures for GRAVITY (PULL) on the GAS Giants
g) There are no "BLACK HOLES" however a VACUUM can create a pull. ( it more or less becomes the same thing ).

### So maybe some answers

a) The origins of the known universe & its possible shape. The universe does not allow a vacuum. If one appears the EMR of the universe will rush to fill it creating matter , the big bang and so on . Generally everthing in space is a sphere so its possible the real universe is too. See drawings.
b) The Singularity & the Big Bang & how did it happen ? See separate notes on " Reconciliation of the singularity / big bang & a Flat universe.
c) How an athmosphere stays in place , why things fall: Density of object is why it sinks , all objects in universe have Grown from almost nothing and it is the stars & planets that have accumulated & expanded out into space and are Pressing out against the E.M.R of space. This is what created the pressure and the density of an object determines which stays closet to the planet surface. The weight of the object is then determined by being sandwiched between the planet and its athmosphere.
   The Atmosphere is often no more than a very thin layer and is comparable to the Skin of an apple is kept in place by the spin of the planet, the motion of its orbit and the constant radiation penitrating its atmosphere. Where a planet's Rotation is stalled as in the case of Venus its atmosphere is only 80km thick. Compared to Earth a similar size planet with a similar pull / gravity despite the massive active volcanos pumping out gas. The gas is escaping because of the lack of spin. Both the Moon & Mercury also have no spin or atmosphere. However unlike Earth , venus is in a closer orbit to the Sun and in its grip and so that plays into its Pull / (Gravity as we know it).
d) The Working of the Solar System & why many Planets are tilted. see separate notes on " The solar System & Planet rotation plus drawings..
e) Reconcilation of the figures for GRAVITY (PULL) on the inner planets:
   see charts Factual info & comparison of inner planet radii.
f) Reconciling the " GRAVITY " of the Outer Gas Giants.
   see charts on Factual info & comparison of gas giants & gravity
g) There are no "BLACK HOLES" however a VACUUM can create a pull. ( it more or less becomes the same thing ) . Needs no further explaination.

### Pluto & Uranus

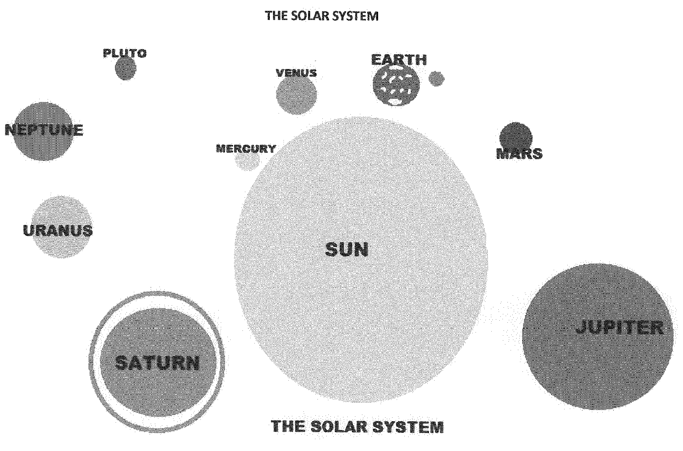

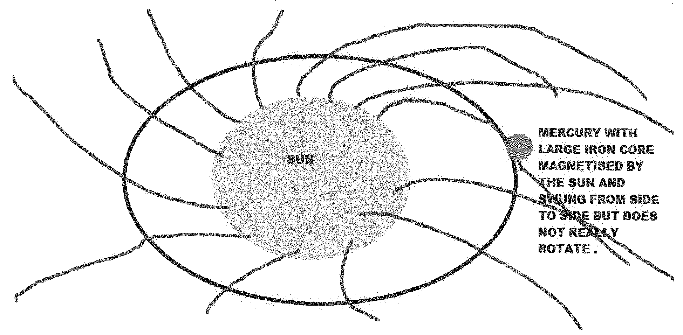

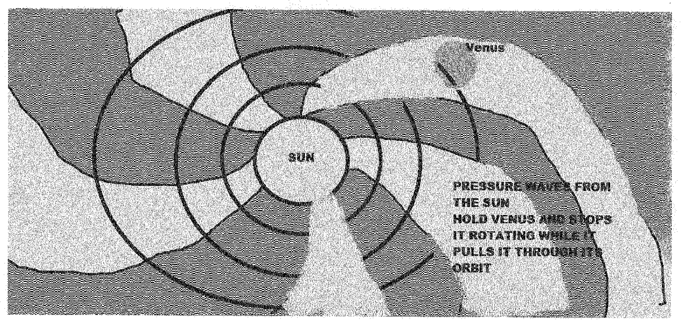

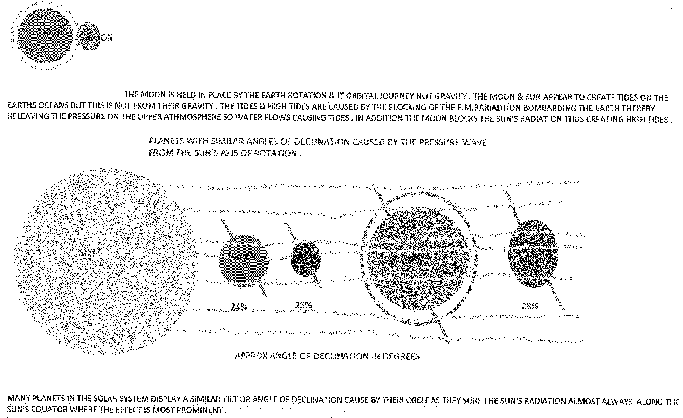

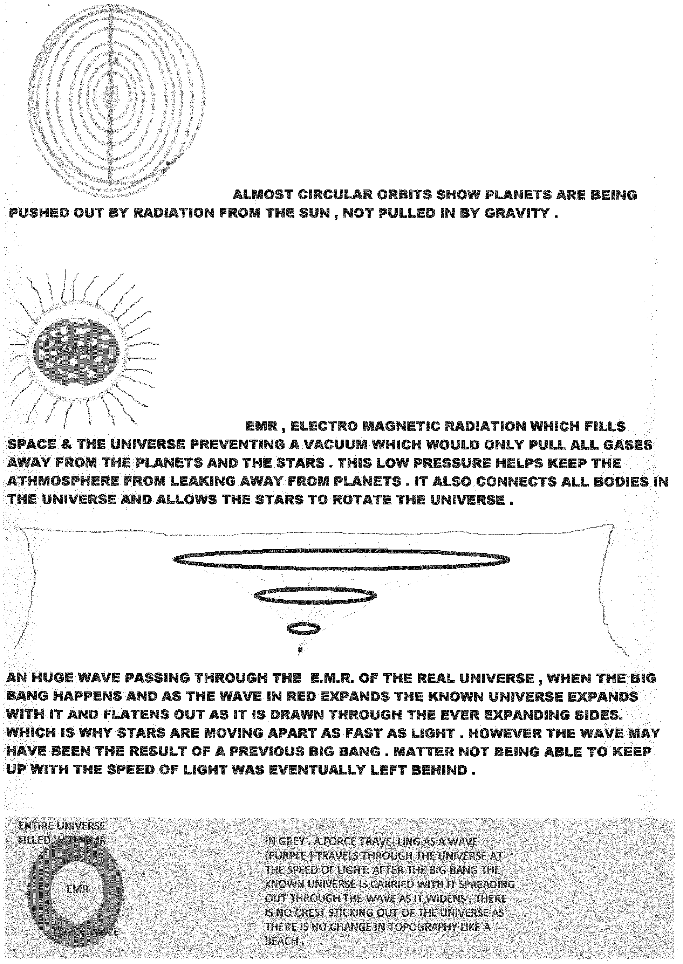

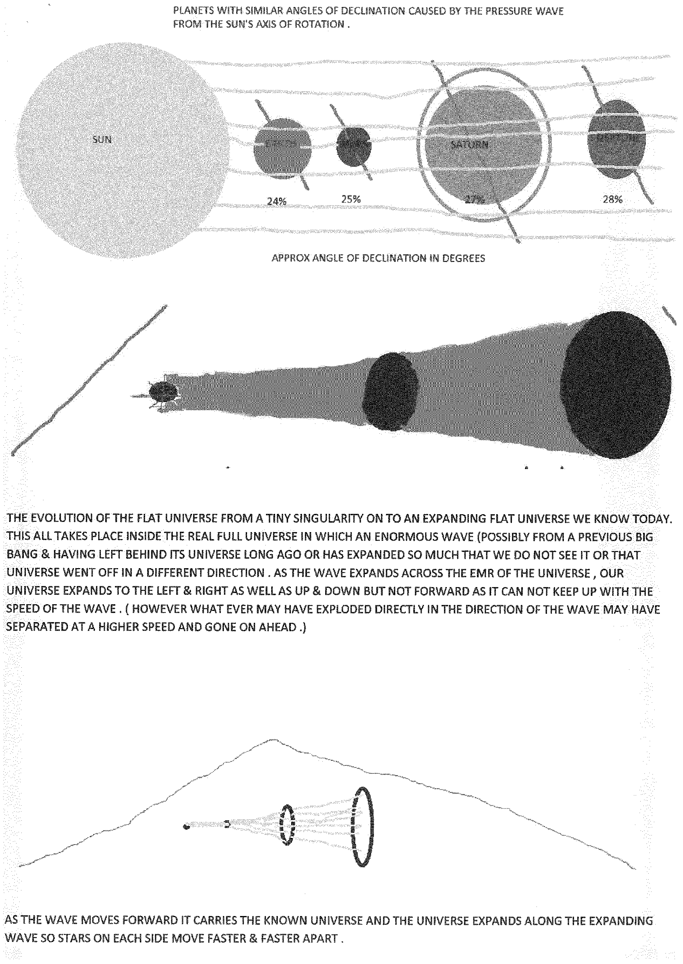

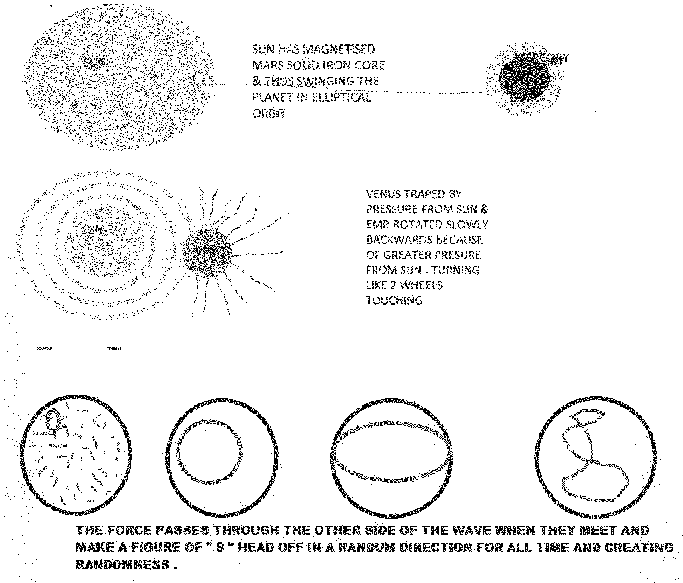

There anomalies are cover off elsewhere on Planets & their rotation. The Earths Moon is also interesting. When A.I. ( ( artificial intlligents ) tries to do the maths on gravity nothing add up. No two planets are the same . There's no standard model. some have an athmosphere others do not. But it has often been said that the gravity on the Moon is too large for its size at 17% of earths, gravity. When one looks at its Mass , Volume this is correct. However when one compares their radius then the moon should actually be at 27% . But if one adds on the radius of the earths Athmosphere another 600 km the figure fr gravity drops to 24%. But only by comparing the Moon to other planets like Mars that have no atmosphere do we even get close at 19%. Then an allowance for the centrafugal force reduces that further and 17% is attainable. (see charts)..

**Most of which will be backed up from KNOWN DATA and crude DRAWINGS with some calculations thrown in for good measure. Please note Pluto is seldom discussed as little is really known about it & it may be more of an Escaped Moon than a planet.**

### CONCLUSION

**Gravity does not exist. The pull experienced is caused by the rotation of a large, usually very large body rotating quite fast (and growing ,expanding like a ballon, historically) & its movement in its orbit (creating a wake).**

Objects appear to fall, this is because the Earth is pushing out (into space having grown over time ) pressing against its athmosphere. So the BODY with the greatest density sinks most but this is because the AIR is pushed up around the BODY because gas & liquids are more fluid. Its is the Air rising not the Body falling.

So a BODY does not have a WEIGHT-anywhere in the universe not even on EARTH. It is the density of it atoms plus the pressure of the athmosphere that give a BODY its weight not GRAVITY.

Then there's the very slight pressure from space and the Solar wind which maintains circular orbits . The real question is: Are the planets being drawn into an expanding Sun (as its rotation draws in space ) or are they being let go / pushed away by the solar wind / radiation ?

### RECONCILIATION OF THE SINGULARITY WITH THE BIG BANG AND A FLAT UNIVERSE.

We tend to see the Universe as static but in fact everything is in constant motion, maybe because The Universe will not allow a VAUUM where possible. But from time to time a Universe is created. The real overall universe is filled with EMR to prevent a vacuum. Its only speculation but I believe that from time to time a vacuum does occur as the EMR does not interact with itself , like photons of light travelling at great speed but they are not cohesive. But from time to time a Vacuum does occur and when that happens the Radiation pours a huge amount of energy into it from all directions creating MASS. The Singularty.

As the Singularty grows it heats up because Radiation from the EMR continues to pour in including microwaves until it explodes in a BIG BANG creating the KNOWN UNIVERSE.

But the "Known Universe "is just what we see at present. Its my Theory that an enormous wave of Force maybe from a previous BIG BANG travelling through the EMR maybe at the speed of light in the Larger Universe, like a Tsunami on the ocean allowed a Vacuum to appear and " The Big Bang" occured . This wave is so big our universe is like tiny bubbles carried along in it. But matter can not travel at the speed of light even though there is no real resistance. So eventually the matter ( stars , planets ) etc from the previous Universe was left behind. As with any wave it is constantly expanding like a ripple on a pond and as this happens our" Known Universe " expands through the wave ( heading opposite directions). So the Stars appear to be travellinf away as fast or even faster than light but actually it is just the wave spreading out that carries them apart like two cars heading in the opposite direction in a tunnel.

The mechanics of the "Big Bang" are as follows. An explosion happens as we know in an instant. Lets say 1000km per second. But the wave is moving at the speed of light 300k km per second. This means that for every meter the Singularty expands, the Wave has moved on 300km while all the time carring the "Singularity with it even that tiny part that was exploding in the opposite direction to the wave. See drawing. Each time the Singularity moved another meter the wave move again another 300 and so on creating a trumpet effect. The known universe then continued to expand into this wave ever since creating a FLAT UNIVERSE as it moves sideways. Normally with any wave on an ocean the force does not carry the object along, the ball or boat is left behind. However:
(1) THAT IS BECAUSE THE OBJECT IS LARGE COMPARED TO THE WAVE.
(2) THERE IS RESISTANCE FOR OBJECTS ON EARTH WHILE NONE EXISTS IN SPACE.

PICTURES SHOW : THE FRONT ELEVATION OF THE WAVE AS IT PASSES INFRONT OF AND AWAY FROM US. MATTER CAN NOT KEEP UP WITH LIGHT OF THE WAVE AND IT FLATTENS OUT AS IT EXPANDS SIDEWAYS THROUGHOUT THE WAVE AS THE WAVE EXPANDS.

PICTURE TWO IS A SIDE ELEVATION SHOWING THE CRESENT AND THE UNIVERSE LIKE AN AIR BUBBLE INSIDE A HUGE WAVE OF FORCE TRAVELLING THROUGH THE ELECTROMAGNETIC RADIATION OF THE UNIVERSE.

### THE SOLAR SYSTEM & PLANET ROTATION :

Generally the Planets rotate in an Anti-clockwise direction and this is the norm.

The reason for this direction is as follows :
Nothing in the Universe Weights anything no matter its size. Therefore the Planets in the Solar system also weight nothing. As The Sun pumps out vast amounts of Solar Radiation it causes a Pressure wave of energy moving out from the Sun. The Sun bulges on its axis of rotation as it spins culminating in many of the planets TILTING as they lean into the Sun. With a lower Radiation on a planets outside ( radiation from space i.e the EMR ) the Sun is acting as a brake on the inside of a planet leaving the outside freer to move faster and therefore the planet turns Anti-clockwise and into the Sun as it moves on its orbit around the Sun.

Those planets that do not follow this pattern of Anti-clockwise rotation have their own individual reasons.

MERCURY : Aptly named after a Metal should have been called " IRON MAN " as it contains 75% Iron. More iron than any other planet in the solar system. The Solid Iron core is slightly magnetic. Its likely that this magnetism was brought about by the Sun's powerful magnetic feilds. This is also the reason why Mercury is one of the few planets to have a real elliptical Orbit. The Sun's magnetic field has locked onto Mercury and prevents it from rotating as it SWINGS the planet from side to side in an ellipticial Orbit.

VENUS : Venus has a slow slightly backward rotation. In fact it could be considered the correct direction of rotation. It is possible that Venus taking into account its size and Orbital distance from the Sun is at the right distance from the Sun where there is almost an equilbrium of force from the Sun's radiation and rotation against the very low background radiation of the EMR of space but like two wheels touching and one rotating (the sun ) the other ( Venus) will rotate in the opposite direction away from the Sun. A clockwise direction.

URANUS : This planet is lying on its side in a horizontal position. This could have been the result of tangling with another planet. Its only speculation but its possible that Uranus formed on the otherside of Juptier and when the Sun went Nuclear there was an explosion of energy released pushing the Gas Giants out further from the Sun. If Uranus was leaning from this wave of energy and its magnetic south pole becamed attracted to Jupiters north pole then Jupiter could have pulled the planet out of orbit and maybe Pluto was one of those moons caught in the middle and dislodged to its present orbit. Pure speculation.

But it is possible that the Sun is pushing the planets out rather than pulling them in . It would not be pulling them in by Gravity but by its Rotation & its movement through space ,like a passing car created a tail wind.

**FACTUAL INFORMATION OF THE PLANETS OF THE SOLAR SYSTEM**

| MASS X | MERCURY | VENUS | EARTH | MARS | JUPITER | SATURN | URANUS | NEPTUNE | MOON |
|---|---|---|---|---|---|---|---|---|---|
| EARTH | 0.06 | 0.80 | 1 | 0.11 | 318 | 95 | 15 | 17 | - |
| DENSITY KG/M3 | 5400 | 5300 | 5500 | 4000 | 1300 | 700 | 1600 | 2300 | - |
| VOLUME | 0.056 | 0.86 | 1 | 0.15 | 1321 | 764 | 63 | 58 | 0.02 |
| DENSITY WATER=1 | 5.5 | 5.25 | 5.50 | 3.94 | 1.33 | 0.71 | 1.70 | 1.77 | - |
| ROTATION | 56DAYS | 243 DAYS | 24 HRS | 24 HRS | 10 HRS | 10 HRS | 16 HRS | 18 HRS | - |
| DIAMETER IN KM | 4875 | 12107 | 12 756 | 6780 | 143K | 120K | 51K | 49.5K | 3476 |
| TILT | VERTICAL | VERTICAL | 24% | 25% | VERTICAL | 27% | HORIZONTAL | 28% | - |
| GRAVITY TO EARTH | 38% | 88% | 100% | 38% | 264% | 115% | 117% | 120% | 17% |

THE SUN DIAMETER AT 1.4M KM IS 10 X JUPITER'S DIAMETER ONE CAN SEE FROM THE STATICS WHY (A.I. ) HAS DIFFICULITY MAKING COMPARISONS ON GRAVITY

**FACTUAL INFORMATION OF THE PLANETS OF THE SOLAR SYSTEM NOW LETS LOOK AT A DIFFERENT COMPARISON " RADIUS "**

| RADIUS | MERCURY | VENUS | EARTH | MARS | JUPITER | SATURN | URANUS | NEPTUNE | MOON |
|---|---|---|---|---|---|---|---|---|---|
| EARTH | 0.06 | 0.80 | 1 | 0.11 | 318 | 95 | 15 | 17 | - |
| DENSITY KG/M3 | 5400 | 5300 | 5500 | 4000 | 1300 | 700 | 1600 | 2300 | - |
| DENSITY WATER=1 | 5.5 | 5.25 | 5.50 | 3.94 | 1.33 | 0.71 | 1.70 | 1.77 | |
| DIAMETER IN KM | 4875 | 12107 | 12 756 | 6780 | 143K | 120K | 51K | 49.5K | 3476 |
| GRAVITY TO EARTH | 38% | 88% | 100% | 38% | 264% | 115% | 117% | 120% | 17% |

THE SUN DIAMETER AT 1.4M KM IS 10 X JUPITER'S DIAMETER ONE CAN SEE FROM THE STATICS WHY ( A.I. ) HAS DIFFICULITY MAKING COMPARISONS ON GRAVITY

**NOW LETS LOOK AT A DIFFERENT COMPARISON " RADIUS " OF INNER ROCKY PLANETS BECAUSE WE KNOW SO MUCH ABOUT EARTH IT IS OFTEN USED AS THE STANDARD MODEL FOR GRAVITY SO LET USE IT FOR COMPARSION.**

| KM | MERCURY | VENUS | EARTH | MARS | THE MOON |
|---|---|---|---|---|---|
| DIAMETER | 4875 | 12107 | 12 756 | 6780 | 3476 |
| RADIUS | 2439 | 6052 | 6378 | 3397 | 1738 |
| GRAVITY | 38% | 88% | 100% | 38% | 17% |
| ANSWER GRAVITY WITH ADJUSTMENTS | 27% | 88% | ----- | 49% | 19% |
| GRAVITY COMPARED TO EARTH | 2439/6378 | 6052/6378 | 3397 / 6378 -(3397 / 6978) 1738 / 6378 | | |
| | 38% | 95% | | 49% - 53% | 27% SO MARS STILL CORRECT ! |
| ADD ATHMOSPHERE FOR EARTH & VENUS + 80KM = | | 6132 | +600KM = 6978KM SO 6132 / 6978 | | |
| | RESULT | 88% | | 88% | SO VENUS STILL CORRECT |
| NOW COMPARE LIKE WITH LIKE : | MERCURY , MARS & THE MOON HAVE NO ATHMOSPHERE SO TAKING MARS AS THE STANDARD WE GET : | | | | |
| | 2439 / 3397 | RESULT | 72% OF MARS GRAVITY | | 1738 / 3397 51% OF MARS GRAVITY |

### THE RESULTS SHOW THAT IF SOMETHING WEIGHS 100KG ON EARTH IT WOULD WEIGH 38KG ON MARS:

SO MERCURY AT 72% OF MARS = 38KG X 72% = 27KG OR A GRAVITY OF 27% WHILE THE MOON IS 51% = 38KG X 51% = 19KG **OR** A GRAVITY OF 19% THEREFORE IN CONCLUSION, THESE RESULTS SHOW THAT MERCURY'S GRAVITY IS HIGH AT 38% ACCOUNTED FOR BY BEING MAGNETISED AND DRAGGED FLUNG AROUND ITS ORBIT BY THE SUN'S MAGNETIC FEILD . FURTHER SUBSTANCIATED BY THE FACT THAT IT IS ONE OF THE FEW PLANETS WITH AN ELLIPTIC ORBIT .WHILE THE MOONS GRAVITY IS ACTUALLY 17% WHICH SCIENTISTS DEEM HIGH FOR ITS SIZE / VOLUME /DENSITY ETC. bUT ACTUALLY IT IS LOWER THAN THE 19% PREDICTED HERE. THIS IS ALSO EXPLAINED BY ITS RELATIONSHIP TO THE EARTH. IT IS NOT BEING FLUNG ABOUT, IT DOES NOT HAVE AN ELLIPTICAL ORBIT BUT A CIRCULAR ORBIT. THE REASON FOR THE REDUCTION FROM 19% TO 17% IS BECAUSE OF " CENTRAFUGAL FORCE " REDUCING ITS GRAVITY. SO DIFFICULT TO GET A STANDARD MODEL FOR WEIGHT COMPARSIONS BUT MARS AS A STANDARD MIGHT BE BETTER IN COMPARING LIKE FOR LIKE. THE RESULT IS THAT WITH A REASONABLE ADJUSTMENT AN OBJECTS WEIGHT / GRAVITY CAN BE AGREEDED FOR ALL THE INNER / ROCKY PLANETS + THE MOON. HOWEVER THAT LEAVES ONE ANOMALY MARS IS 38% OF EARTHS GRAVITY BUT FIGURES SHOW IT SHOULD BE AT LEAST 49% HOWEVER THE EARTHS ATHMOSPHERE MAY BE PLAYING A GREATER ROLE IN DETERMINING WEIGHT. THIS WOULD REDUCE THE DIFFERENCE IF FURTHER ADJUSTED.

ONE CAN SEE FROM THE STATICS WHY ( A.I. ) HAS DIFFICULITY MAKING COMPARISONS ON GRAVITY

**FACTUAL INFORMATION OF THE PLANETS OF THE SOLAR SYSTEM NOW LETS LOOK AT A COMPARISON OF THE GAS GIANTS & GRAVITY.**

| DENSITY | JUPITER | SATURN | URANUS | NEPTUNE |
|---|---|---|---|---|
| WATER=1 | 1.33 | 0.71 | 1.70 | 1.77 |
| DIAMETER IN KM | 143K | 120K | 51K | 49.5K |
| GRAVITY TO EARTH | 264% | 115% | 117% | 120% |
| ROTATION SPEED | 10 HRS | 10 HRS | 16 HRS | 18 HRS |

SO TO COMPARE GRAVITY ONE MUST MAKE ADJUSTMENTS ON SIZE AND DENSITY PLUS ROTATION SPEED. DENSITY MUST BE TAKEN INTO ACCOUNT FOR THE GAS GIANTS BECAUSE GAS IS MUCH MORE COMPRESSABLE THAN LIQUID OF SOLIDS.

DIAMETER OF SATURN 120K / JUPITER'S 143K = 84% OF GRAVITY AT 264 TIMES EARTH = 221%. REDUCED FUTHER BY DENSITY 1.33 TO 0.71 = 53% REDUCTION

SO 221 X 53% = 117 % WHICH MATCHES SATURNS FIGURE OF 117%.

URUNAS = DIAMETER 51K KM / JUPITER'S 143K = 36% = GRAVITY 264% REDUCED X 36% = 95%. DENSITY INCREASES 1.33 FOR JUPITER TO 1.70 AN INCREASE 1.70 / 1.33 = 28% INCREASE ON GRAVITY OF 95% EARTH = 123% AND URUNAS IS 117% BUT WHICH IS ACCOUNTED FOR BY ITS SLOWER ROTATION OF 16 HRS I.E LESS CENTRAFUGAL FORCE .

NEPTUNE WITH A SIMILAR SIZE & DENSITY AND SIMILAR SPEED OF ROTATION PRODUCES A SIMILAR RESULT. THEREFOR THE PULL EXPERIENCED BY PROBES ON THE GAS GIANTS IS CONSISTANT FOR ALL. BUT IT IS NOT GRAVITY . THE PULL / WEIGHT ON EXPERIENCES IS DUE TO THE SPIN OF THE BODY & ITS MOVEMENT IN THE SOLAR SYSTEM OR THE UNIVERSE THAT IS DRAWING IN AN OBJECT & IN THE CASE OF STARS THERE IS ALSO AN OUTWARD PUSH FROM THE RADIATION WHICH CAUSES A PRESSURE WAVE AGAINST THE PLANETS. THIS IS WHAT PRESSES AGAINST THEIR ATHMOSPHERE ALONG WITH THE E.M.R. OF SPACE. AND BETWEEN THEM THEY DECIDE WHICH WAY A PLANET WILL ROTATE.

ONE CAN SEE FROM THE STATICS WHY ( A.I. ) HAS DIFFICULITY MAKING COMPARISONS ON GRAVITY

## Claims

1. GRAVITY DOES NOT EXIST: PERIOD. GRAVITY DOES NOT EXIST AS A FORCE , OF ATTRACTION NOR AS A PARTICLE OF MATTER LIKE A GRAVITON , ELECTRON , PROTON OR OTHER FORMS OF MATTER .i.E. TWO BODIES FREELY FLOATING IN SPACE WILL NOT BE ATTRACTED TO EACH OTHER.

2. SPACE IS NOT A VACUUM : IF SPACE WAS A VAST VACUUM IT WOULD PULL THE STARS APART & NO PLANET COULD HOLD ON TO A GAS ATMOSPHERE. NATURE WILL NOT ALLOW A VACUUM TO EXIST FOR LONG PERIODS OF TIME, MAYBE JUST SECONDS , MINUITES. NATURE WILL ALWAYS TRY TO FILL IN A VACUUM OFTEN BY EXPANSION OF RADIATION.

3. SPACE IS A VERY VERY LOW PRESSURE SYSTEM : MAINLY FILLED WITH A SOUP OF EXOTIC PARTICLES & RADIATION LIKE THE EMR & MATTER.

4. THE KNOWN UNIVERSE IS FLAT : BECAUSE IT IS BEING CARRIED BY A FORCE ( MOST LIKELY FROM A SHOCKWAVE CAUSED BY A PREVIOUS BIG BANG ) & TRAVELLING IN THE FORM OF A HUGE WAVE THROUGH THE EMR THAT FILLS THE REAL UNIVERSE. AS THIS WAVE ENLARGES OUR KNOWN UNIVERSE EXPANDS THROUGH THE WAVE MOSTLY SIDEWAYS (LIKE RAILWAY TRACKS WITH THE STARS / GALAXIES HEADING IN OPPOSITE DIRECTIONS) WHICH EXPLAINS THE PRECEIVED SPEED AS 90% THAT OF LIGHT BUT IT IS THE WAVE THAT IS EXPANDING MAY CLOSE TO THE SPEED OF LIGHT OR FASTER AS IT IS NOT ONE SINGLE OBJECT BUT A FORCE MOVING LIKE TO CARS, EACH DOING 100KPH IN OPPOSITE DIRECTIONS. WHICH WOULD LOOK TO OUR EYES THAT WE / ONE CAR WAS STATIONARY AND THE OTHE WAS TRAVELLING AWAY AT 200KPH.

5. THE REAL UNIVERSE MAYBE A SPHERE : LIKE MOST THINGS NOT MAN MADE (ATOMS ELECTRONS, PROTONS, NEUTRONS, THE SUN , STARS , PLANETS , THOSE LARGE THINGS IN SPACE, THE REAL OVERALL UNIVERSE IS MOST LIKELY A ROUND SPHERE FILLED WITH ENERGY / RADIATION SUCH AS THE EMR & SOME MATTER. IF THIS IS THE CASE THEN A VACUUM MAY HAVE OCCURED MANY TIMES IN THE PAST LEADING TO THE CREATION OF MATTER , SINGULARITY, THE BIG BANG & HUGE WAVES CIRCULATING THE SPHERE & EVENTUALLY FOLDING IN ON ITSELF LIKE MULTIPLE FIGURES OF 8 AND CONTINUING IN ALL DIRECTIONS LIKE INTERFERRANCE , RANDOMNESS IN THE EMR.

6. THE CREATION OF MATTER FROM ENERGY / RADIATION: MOTHER NATURE WILL AVOID ALLOWING A VACUUM TO EXIST. RADIATION INCLUDING LIGHT EXPANDS TO FILL THIS SPACE. BUT NEITHER LIGHT NOR RADIATION IS COHEASIVE LIKE WATER SO FROM TIME TO TIME A VACUUM HAPPENS TO OCCUR. THIS DRAWS IN VAST AMOUNTS OF RADIATION AT UNSTOPPABLE SPEED, CREATING MATTER, THE SINGULARITY & A BIG BANG RESULTING IN THE KNOWN UNIVERSE.

7. WHY OUR UNIVERSE IS EXPANDED SO FAST & STARS TRAVEL AT CLOSE TO THE SPEED OF LIGHT: OUR UNIVERSE WAS CREATED INSIDE THE WAVE OF A PREVIOUS SHOCKWAVE FROM AN OLDER BIG BANG THAT HAD EXPANDED OVER BILLIONS OF YEARS & CONTINUES TO DO SO WHICH IS WHY STARS APPEAR TO BE MOVING APART SO FAST.

8. OUR UNIVERSE MAY BE ONE OF MANY : OUR UNIVERSE WAS CREATED WHEN A VACUUM OCCURED DRAWING IN VAST AMOUNTS OF RADIATION THAT CREATED MATTER & THIS MAY HAVE HAPPENED SEVERAL TIMES BEFORE & MAYBE HAPPENING MANY TIMES AT PRESENT IN THE REAL OVERALL UNIVERSE WHICH MUST BE SO VAST.

9. MATTER CAN NOT KEEP UP WITH THE SPEED OF THE FORCE / WAVE MOVING THROUGH THE EMR (FOLLOWING A BIG BANG) SO OUR UNIVERSE WILL EVENTUALLY BE LEFT BEHIND : THIS MAY HAVE HAPPENED TO OTHER UNIVERSES OR THEY WERE TRAVELLING IN A DIFFERENT DIRECTION. AN EXPANDING WAVE ON THIS SCALE WOULD MEAN A UNIVERSE WOULD BE AKIN TO TINY BUBBLES CARRIED IN A TSUNAMI. NORMALLY AS A WAVE MOVES THROUGH AN OCEAN IT IS ONLY THE FORCE THAT MOVES NOT THE SEA/ WATER UNLESS THE TOPOGRAPHY CHANGES LIKE THE FORCE ENCOUNTERS A BEACH THEN THE WATER RISES CREATING A LARGE WAVE. HOWEVER, THAT'S EARTH AND THE OCEAN'S WATER IS VERY SOLID AND VAST AND AN OBJECT LIKE A BOAT HAS INERSIA WHEREAS IN THE UNIVERSE THE EMR IS ALREADY MOVING AT THE SPEED OF LIGHT AND THERE IS NO RESISTANCE SO EASY TO MOVE STAR, PLANET, GALAXIE EVEN THE KNOWN UNIVERSE. THIS ALSO MAKES IT POSSIBLE FOR THE STARS TO TURN THE EMR . THE SUN / STAR IS ACTING LIKE A GIANT HURRICANE TURNING EVERYTHING.

10. BECAUSE THE REAL UNIVERSE MAYBE A SPHERE OF EMR , A WAVE WILL CONTINOUSLY CIRCUMNAVIGATE THE GLOBE GETTING BIGGER ALL THE TIME : BUT AS THIS IS A FORCE NOT A SUBSTANCE IT WILL PASS THROUGH ITSELF WHEN IT MEETS ON THE OTHER SIDE OF THE SPHERE. iT WOULD NOT BE ANOTHER CIRCULAR WAVE BUT MEET AT DIFFERENT POINTS THUS THE WAVE WILL HEAD OFF IN DIFFERENT DIRECTIONS SENDING THE EMR IN EVERY DIRECTION TOO. AND HOW MANY TIMES HAS THIS HAPPENED ?

11. LIGHT (RADIATION) CAN MOVE PLANETS, STARS & GALAXIES: MATTER, STARS , PLANETS, MOONS ALL WEIGH NOTHING IN SPACE : SO THEY ARE VERY EASY TO MOVE ABOUT EVEN BY LIGHT

12. SEVERAL FORCES CAUSE MOVEMENT IN THE UNIVERSE : A RARE VACUUM WILL DRAW IN THE EMR CREATING MATTER , THE BIG BANG & THEREFORE A SHOCKWAVE IN THE EMR. BUT AFTER THAT ITS THE STARS THAT ARE THE DRIVING FORCE OF THE KNOWN UNIVERSE (THOUGH THE UNIVERSE EXPANDS INSIDE THE WAVE OF A PRECIOUS BIG BANG).

13. EVERYTHING IN THE UNIVERSE IS CONNECTED BY THE VERY LOW PRESSURE FROM THE EMR : ALL MATTER , THE SUN, STARS, PLANETS HAVE GROWN BY ACCUMULATION & IMPOSE THEMSELVES INTO THE EMR OF SPACE. SO IT IS THERE IMPOSING SIZE PLUS THEIR SPIN COMBINED WITH THE ORBIT OF THESE BODIES THAT HOLD THEIR ATMOSPHERES OR PLANETS ORBITING STARS AND NOT GRAVITY.

14. IT IS THE STARS AS THEY PUMP OUT RADIATION, SPIN & MOVE THAT TURNS SPACE/THE EMR WHICH MOVES THE PLANETS & EVERYTHING ELSE LIKE GALAXIES IN THEIR ORBITS. NOT GRAVITY.

15. THE RADIATION FROM THE SUN & STARS CREATES A WAVE OF PRESSURE THAT KEEPS THE PLANETS IN A MOSTLY CIRCULAR ORBIT : PUSHING THE PLANETS AWAY FROM THE SUN, WHILE ITS SPIN & MOVEMENT DRAWS THE PLANETS IN.

16. THE RADIATION FROM THE SUN ALSO DETERMINS WHICH WAY A PLANET WILLb SPIN : CLOCKWISE OR ANTI-CLOCKWISE. i.e IF THE PLANET IS RELATIVELY CLOSE LIKE VENUS THE PRESSURE FROM THE SUN TURNS THE PLANET IN THE OPPOSITE DIRECTION TO THE SUN LIKE TWO WHEELS TOUCHING, BECAUSE THE RADIATION FROM THE SUN HAS A SLIGHTLY GREATER EFFECT THAN THE LOW PRESSURE OF THE EMR ON THE FAR SIDE OF VENUE. THE SUN'S FORCE WINS THAT BATTLE & VENUS IS THE ONLY PLANET THAT TURNS CLOCKWISE BUT SOME MOONS ALSO DO THIS.

17. RADIATION FROM THE SUN ( STARS ) CAN ALSO ACT LIKE A BRAKE STOPPING A PLANET'S SUNNY SIDE FROM ROTATING AS QUICK AS THE DARK SIDE OF THE PLANET : MOST PLANETS IN THE SOLAR SYSTEM TURN ANTI-CLOCKWISE, THE SAME WAY THE SUN DOES : THIS IS BECAUSE THE SUN'S FORCE / RADIATIONS ACTS AS A BRAKE ON THE NEAR SIDE (SUNNY SIDE ) LEAVING THE FAR SIDE (DARK SIDE) OF A PLANET FREE TO TURN AS IT MOVES IN ITS ORBIT.

18. THE SUN HAS MAGNETISED MERCURY'S IRON CORE : THIS ACCOUNTS FOR ITS ELIPTICAL ORBIT. MERCURY ( OR IRON MAN, 75% MASS IS IRON) HAS A SOLID IRON CORE WITH A SMALL MAGNETIC FEILD. THIS COULD NOT BE GENERATED BY THE ROTATION OF A LIQUID CORE AS MERCURY'S CORE IS SOLID. SO IT HAS BECOME MAGNETISED BY THE SUN'S POWERFUL MAGNETIC FlELD. THIS IS WHY MERCURY DOES NOT REALLY ROTATE & WHY IT IS ONE OF THE ONLY PLANETS TO HAVE A TRUELY ELIPTICAL ORBIT. ITS THE SUN'S MAGNETIC FIELD THAT HAS A LOCK ON THE PLANET AND IT IS DRAGGING THE PLANET FROM SIDE TO SIDE. THIS, NOT GRAVITY ACCOUNTS FOR IT SPEEDING UP & SLOWING DOWN.

19. PULL (GRAVITY) OF A BODY IN SPACE : BY ACCUMULATION A PLANET OR STAR HAS GROWN AND IMPOSES ITSELF INTO SPACE OR THE EMR, EXPANDING OUT FROM ITS CENTER OR CORE : THEREFORE IT IS THE RADIUS OF A BODY , PLANET ,STAR THAT IS THE IMPORANT FIGURE FOR COMPARING A PLANETS (GRAVITY) PULL. BUT IT IS ITS SIZE ,SPEED OF SPIN AND MOVEMENT / ORBIT THAT CREATE PULL NOT GRAVITY.

20. CALCULATION OF WEIGHT OF OBJECT : THE WEIGHT OF A PERSON / OBJECT ON A PLANET IS DETERMINED BY THE DENSITY OF THAT OBJECT I.E. IRON MOLECULES ARE DENSER THAN OXYGEN, ITS MASS OR AMOUNT OF MATTER OR THE SIZE OF THE BODY PLUS THE ATMOSPHERE ABOVE THAT OBJECT (THE PRESSURE APPLIED) THAT GIVE IT ITS WEIGHT, ITS NOTHING TO DO WITH GRAVITY. WHEN WE SAY SOMETHING IS/HAS FALLEN WE REALLY MEAN IT HAS SUNK THROUGH THE GAS OR LIQUID WHICH HAVE RISEN. MOST LIQUIDS LIKE WATER OR GASES LIKE AIR ARE INVISABLE OR TRANSPARENT SO WE FOCUS ON THE OBJECT AND SAY IT FELL. BUT WHAT WE DO NOT OBSERVE OR COMMENT ON IS THAT SOMETHING ELSE HAS RISEN THEREFORE THE GREATER THE DENSITY Of A BODY THE MORE IT WILL SINK TOWARDS THE CORE OF A PLANET ( AS OTHERS USUALLY MORE FLUID LIKE GASES OR LIQUIDS RISE.)

21. ABSENCES OF ATMOSPHERE: WHY HAVE SOME PLANETS LIKE MARS OR MOONS NO ATMOSPHERE ? THE REASON IS THEY ARE SPINNING TOO SLOW AND ARE TOO SMALL FOR THE SPEED AT WHICH THEY ROTATE TO HOLD ON TO AN ATMOSPHERE.

22. HIGHER SPIN SPEEDS OF THE PLANETS : WITH THE ODD EXCEPTION (AS ALREADY EXPLAINED ON INDIVIDUAL PLANETS ) THE LARGER A PLANET THE FASTER ITS SPIN . THE EARTH SPINS FASTER THAN MARS ETC. BUT THE SPEED ALSO INCREASES EXPONENTIALLY. I.E. THE EARTH IS TWICE AS BIG AS MARS & SPINS TWICE AS FAST. BUT JUPITER IS 11 TIMES THE DIAMETER OF EARTH BUT SPINS ABOUT 45,000 KPH OR CLOSE TO 45 TIMES THE SPEED OF EARTH'S ROTATION. WHY IS THIS ? THE REASON FOR THIS IS THAT THE LARGER A PLANET IS , LIKE A GAS GIANT SUCH AS JUPITER THE GREATER THE SURFACE AREA ON THE FAR SIDE OF THE PLANET FROM THE SUN . SO AS THE SUN'S RADIATION BOMBARDS THE GAS ATMOSPHERE IT ACTS LIKE A BRAKE HOLDING THE PLANET IN ITS GRIP WHILE THE LOW PRESSURE ON THE DARK SIDE IS FREE TO MOVE. THE LARGER THIS DARK SURFACE AREA THE GREATER ITS SPEED WILL BE . AS THIS IS ABOUT HAVE THE PLANETS SURFACE AREA , IT REDUCES THE DIFFERENCE BETWEEN JUPITER & SATURN WHICH IS WHY THEIR SPEEDS ARE SIMILAR.

23. REASON FOR A PLANETS TILT: MOST PLANETS HAVE A TILT / ANGLE OF DECLINATION. THIS IS CAUSED BY THE SPIN AND ORBIT OF A PLANET AGAINST THE OUTWORD PRESSURE COMING FROM SUN'S RADIATION. THE TILT SI SIMILAR FOR MOST PLANETS THAT HAVE A TILT AND INCREASES SLIGHTLY THE FURTHER OUT FROM THE SUN. THOSE THAT DO NOT HAVE A TILT ARE EXPLAINED INDIVIDUALLY.

24. OCEAN TIDES ON EARTH ; GRAVITY DOES NOT CAUSE OCEAN TIDES ON EARTH . OCEAN TIDES ARE CAUSED BY THE SUN'S RADIATION ON THE NEAR SIDE OF THE PLANET. THE RADIATION BOMBARDS THE ATMOSPHERE AND ALSO HEATS IT CAUSING IT TO EXPAND AND PUSHING IT TOWARDS THE OTHER SIDE WHERE THE MOON MAY BE. BUT THE MOON DOES NOT ATTRACT THE WATER IN THE OCEANS.

25. HIGH TIDES ARE CAUSED AT THE SOLAR ECLIPSE: IT LOOKS AS IF THE SUN & MOON HAVE LINED UP AND THEIR GRAVITY (WHICH DOES NOT EXIST) IS ATTRACTING THE OCEANS CREATING HIGH TIDES BUT ACTUALLY WHAT IS HAPPENING IS THAT THE MOON IS BLOCKING MUCH MORE OF THE SUNS RADIATION THAN AT ANY OTHER TIME THUS RELIEVING THE PRESSURE & HEAT ON THE ATMOSPHERE AND ALLOWING THE ATMOSPHERE TO EXPAND. THIS IN TURN RELIEVES THE PRESSURE ON THE OCEAN WHICH FLOWS IN THE DIRECTION OF THE MOON & SUN BUT NOT BY ATTRACTION.

26. INSIDE ATOMS : AS THE UNIVERSE DOES NOT ALLOW A VACUUM THERE IS NO EMPTHY SPACE IN AN ATOM EITHER . SO THE SPACE BETWEEN THE ELECTRON & THE NUCLEUS IS ALSO FILLED WITH RADIATION . OTHERWISE THE ATOM WOULD IMPLODE OR EXPLODE. A BODY (EVEN A PERSON ) IS NOT MADE UP MAINLY OF A GIANT VACUUM. RADIATION/ENERGY PROVIDES THE SUPPORT THAT FILLS IN EVERYTHING , MATTER & SPACE & ALL THE REST.

27. THE VACCUM , NO NUCLEAR FORCE , INSIDE AN ATOM'S NUCLEUS EITHER: THE REASON THE PROTONS WITH THEIR POSITIVE CHARGE DO NOT REPEL EACH OTHER AND PUSH EACH OTHER OUT OF THE NUCLEUS MAYBE BECAUSE IT WOULD CREATE A VACUUM AND IT IS THAT WHICH PREVENTS THEIR ESCAPE.

28. SOME PLANETS DO NOT TILT: JUPITER DOES NOT TILT BECAUSE OF IT SIZE ,DENSITY AND SPEED OF ROTATION ( WHILE SATURN IS SO LESS DENSE COMPARED TO JUPITER )

29. THE PLANET URANUS . ITS PURE SPECULATION WHY URANUS REVOLVES ON ITS SIDE. MY SUGGESTION IS THAT WHEN THE GA5 GIANTS FORMED FROM POSSIBLY A SINGLE GAS CLOUD THAT BROKE AWAY FROM THAT WHICH FORMED THE SUN , URANUS WOULD HAVE BEEN ON THE OTHER SIDE OF JUPITER, SMALL (URANUS ) , LARGE (JUPITER) LESS LARGE ( SATURN) AND FINALLY SMALL (NEPTUNE) A MORE EVEN BREAKUP INTO 4 GIANTS. LIKE THE SUN ALL FORMED. THEN THE SUN WENT NUCLEAR AND CREATED A SHOCKWAVE TILTING URANUS , ITS SOUTH MAGNETIC POLE ROSE & WAS IMMEDIATELY ATTRACTED TO JUPITER'S NORTH MAGNETIC POLE which may have also tilted forward leaning towards Uranus. JUPITER'S SPIN AND MASS WAS ABLE TO PULL URUNAS OUT OF ITS ORBIT AND SEND IT INTO ITS CURRENT ORBIT AND TILT.

30. THE SLOWING DOWN OF THE EARTH'S ROTATION : THE REASON THE EARTH IS SLOWING DOWN IS NOT BECAUSE OF THE MOON'S GRAVITY (AS THERE IS NO SUCH THING AS GRAVITY), THE EARTH IS SLOWING BECAUSE THE MOON IS TRAVELLING IN THE OPOSITE DIRECTION TO THE ROTATION OF THE EARTH AND THUS CREATING A DRAG ON THE EARTH'S SPIN AND ALL IT ROTATES. BUT IT IS MORE COMPLICATED THAN THAT. THE MOON BLOCKS THE RADIATION FROM THE SUN WHICH AS I MENTIONED IS ACTING LIKE A BRAKE ON THE SUNNY SIDE OF THE EARTH. THIS ALLOWS THE LOW PRESSURE ON THE DARK/FAR SIDE OF THE EARTH TO MOVE MORE FREELY - BUT THIS IMBALANCE IS REDUCED IN FAVOUR OF THE SUNNY SIDE WHEN THE MOON IS BLOCKING THE SUN'S RADIATION NONE MORE SO THAN DURING A SOLAR ECLISPE WHEN THE SUNNY SIDE GOES DARK AND WOULD HAVE EQUAL OR LESS RADIATION THAN THE FAR SIDE. SO THE NEAR SIDE ( TO SUN ) IS COMPETING FOR SPIN & GOING IN THE OPPOSITE DIRECTION TO NORMAL SPIN.

31. THE SUN'S SPIN & MOVEMENT PULL THE PLANETS IN THEIR ORBIT NOT GRAVITY : BUT AS THIS PROCESS PULLS THE PLANETS IN , THE SUN'S POWERFULL RADIATION IS PUSHING THE PLANET AWAY (KEEP IN MIND THAT THE PLANETS WEIGH NOTCHING) LIKE A SOLAR WIND PUSHING SOME LARGE FEATHERS AWAY. THE QUESTION IS, LIKE THE EARTH'S MOON , ARE THE PLANETS DRIFTING FURTHER AWAY FROM THE SUN ? AS THE KNOWN UNIVERSE EXPANDS, THE SOLAR SYSTEM MAY ALSO BE EXPANDING AND THE PLANETS ARE DRIFTING AWAY TOO.

32. IT IS A PLANETS ATMOSPHERE THAT ROTATES A PLANET AND NOT THE OTHER WAY ROUND. THIS IS BECAUSE THE SUN (STARS) ARE THE DRIVES AND THEIR SPIN & ROTATING RADIATION BOMBARD THE ATMOSPHERE OF A PLANET AS WELL AS HEATING & EXPANDING THE ATMOSPHERE WHILE ALSO PULLING IT & THE PLANET ALONG ITS ORBIT. THE PLANET IS LIKE A BALLOON THAT HAS EXPANDED INSIDE ITS ATMOSPHERE WHICH IS BEING TURNED BY THE SUN. THIS IS WHY OBJECTS INSIDE THE ATMOSPHERE SUCH AS PLANES ETC MOVE RELATIVE TO THE PLANET. A KIND OF BALLOON INSIDE A BALLOON . THE RADIATION BOMBARDING & SPINING & ORBITING THE ATMOSPHERE/PLANET KEEPs THE ATMOSPHERE IN PLACE.

33. GRAVITY DOES NOT EXIST SO IT DOES NOT BEND LIGHT. THE DIRECTION OF LIGHT FROM ANOTHER STAR IS ALTERED BECAUSE OUR SUN (& OTHER STARS ) ARE ROTATING AND TURNING THEIR RADIATION & THE EMR AS THEY SPIN & MOVE IN SPACE . LIGHT FROM ANOTHER STAR PASSES THROUGH THIS TURNING FIELD OF RADIATION & IS ITSELF REFRACTED .
Patentability
The claims made here and the PROCESSES described show that the Known Universe is made by mechanical Processes , one could say industral processes ( but don't try this at home haha ). Therefore I have shown that the application for grant of patent is legitimate . And while one would not be comtemplatlng building a Universe in factory , there are many scientific & educational books to be written and many an educational aid to be manufactured . But some of the processes may have other Industral applications & If one was considering building a Universe In the future I would recommend building It outside the Solar System (that's a deal breaker haha ) . It can be said when the laser was first invented there was no application for It but now it Is indespensible . One could also say that bombs & munitions have no domestic or industrial use but the factory orders are full. Whe can say what is an Invention.
